# FASCICULE DE BREVET EUROPEEN

(11) **EP 1 979 285 B1**
(45) Date de publication et mention de la délivrance du brevet: **02.01.2019**
(21) Numéro de dépôt: 07712015.2
(22) Date de dépôt: 12.01.2007
(51) Int. Cl.: C03C 17/04, C03B 33/07, C03B 27/04, B32B 17/10

(54) **VITRAGE COMPORTANT UN MOTIF EMAILLE**
EMAILSCHICHT ENTHALTENDE VERGLASUNG
GLAZING COMPRISING AN ENAMEL LAYER

(30) Priorité: 16.01.2006 EP 06100363
(43) Date de publication de la demande: 15.10.2008
(73) Titulaire: AGC Glass Europe, 1348 Louvain-la-Neuve (BE)
(72) Inventeur: PASZTO, Stefan, B-6040 Jumet (BE); LUCCA, Nerio, B-6040 Jumet (BE); GOUBAU, Jérome, B-6040 Jumet (BE)
(74) Mandataire: Le Vaguerèse, Sylvain Jacques
(86) Numéro de dépôt international: PCT/EP2007/050302
(87) Numéro de publication internationale: WO 2007/080186

(56) Documents cités:
- EP-A- 0 415 020
- WO-A-2005/033027
- US-A- 5 443 669
- US-A1- 2002 148 255

## Description

La présente invention concerne les vitrages subissant un traitement thermique de bombage et/ou trempe, et comportant des motifs émaillés s'étendant au moins partiellement jusqu'au bord de ces vitrages.

Des vitrages de ce type sont en particulier utilisés dans le domaine automobile. Dans ce domaine les applications les plus usuelles concernent les pare-brise, les lunettes arrière, les toits et certains vitrages latéraux. Dans la suite on fait référence aux lunettes et aux pare brise, mais les même remarques s'appliquent aux autres vitrages présentant des caractéristiques analogues comportant un bord émaillé.

Les pare-brise et lunettes sont à l'heure actuelle systématiquement collés à la carrosserie des véhicules, notamment pour permettre un montage dit « flush », montage dans lequel le profil du vitrage se trouve dans la continuité de celui de la carrosserie. Ce mode de fixation nécessite une protection du joint de colle contre les dégradations que pourrait causer l'exposition aux rayonnements UV. A cet effet le joint de colle est masqué, ce que l'on réalise traditionnellement en disposant un bandeau d'émail opaque sur la périphérie du vitrage. Ce bandeau joue également un rôle esthétique en dissimulant le cordon de colle irrégulier qui, à défaut, serait visible à travers le vitrage.

L'utilisation de vitrages fonctionnels fait aussi qu'il est nécessaire de dissimuler le plus possible derrière ces motifs émaillés les éléments qui sont associés à ces fonctions, notamment des conducteurs électriques dans le cas des vitrages comportant des éléments de chauffage du vitrage ou encore les bords des couches conductrices ou réfléchissant les infrarouges pour des vitrages feuilletés, couches qui sont habituellement interrompues à une à très faible distance du bord du vitrage pour prévenir leur dégradation inesthétique lorsqu'elles sont exposées à l'atmosphère environnante.

Dans la suite de la description, parlant des motifs émaillés, on fait référence aux motifs de masquage disposés principalement à la périphérie de nombreux vitrages "automobile". La technique selon l'invention concerne néanmoins tous les vitrages comportant un motif d'émail qui s'étend au moins en partie jusqu'au bord de ceux-ci.

L'application de motifs émaillés jusqu'au bord du vitrage est souhaitée pour les raisons d'esthétiques évoquées précédemment. Cette application dans les modes traditionnels de production de ces vitrages pose des problèmes de mise en oeuvre.

Traditionnellement le dépôt du motif de composition d'émail sur le vitrage est effectué sur la feuille de verre préalablement découpée aux dimensions finales. La feuille ainsi revêtue est ensuite soumise aux opérations thermiques de bombage et/ou trempe.

Quelle que soit la technique d'application de la composition d'émail, notamment par sérigraphie ou par une technique de projection de gouttelettes ("ink-jet"), la délimitation par rapport au bord du vitrage n'est généralement pas satisfaisante. La limite du motif soit ne coïncide pas avec le bord du vitrage et laisse une marge non revêtue, soit tend à dépasser le bord du vitrage et déborde sur la tranche de celui-ci.

Le document US 2002/0148255 décrit une méthode de bombage d'un vitrage revêtu d'une couche d'une composition d'émail. Cette couche s'étend jusqu'au bord du vitrage. La découpe de la feuille de verre est effectuée après la pré-cuisson de la composition d'émail.

Dans le premier cas la qualité esthétique souhaitée n'est pas atteinte. Le motif n'est pas rigoureusement au bord du vitrage. Dans le second cas la présence de l'émail sur la tranche de la feuille introduit une modification locale des contraintes de bord qui conditionnent une part significative des propriétés mécaniques du vitrage. La qualité des vitrages dans ce cas n'est pas garantie. Il convient donc d'éviter ces débordements.

Pour prévenir ces difficultés, il est proposé de former les vitrages selon l'invention en appliquant la composition émaillée sur un primitif dont les dimensions sont supérieures à celles du vitrage final. La composition une fois appliquée, est ensuite "précuite" pour éliminer les constituants volatiles, et de préférence la quasi-totalité des constituants organiques. Cette "pré-cuisson" conduit à un revêtement qui est bien stabilisé. Le primitif portant la composition précuite est ensuite amené aux dimensions finales. Cet ajustement comporte la découpe du vitrage et le rodage des bords.

La découpe est traditionnellement effectuée au moyen de molettes. La dureté des émaux étant sensiblement supérieure à celle du verre, et leur constitution granulaire les rendant particulièrement abrasifs, il est préférable de disposer la ligne de coupe hors mais à proximité immédiate des zones revêtues lorsque le trait de découpe est situé sur la face de la feuille portant l'émail précuit. La distance de ce trait de découpe de la limite de l'émail peut être avantageusement suffisamment faible pour que l'opération de rodage suffise pour ramener l'émail précisément au bord du vitrage.

Il est aussi possible pour les vitrages selon l'invention de procéder à la découpe de la feuille en traçant le trait de découpe sur la face de la feuille qui n'est pas revêtue du motif émaillé. Dans ce cas la précision de l'application est moins contraignante. La découpe peut se situer en regard d'une partie revêtue, dans la mesure où la molette de découpe n'est pas en contact avec la composition d'émail. Bien entendu, il est aussi possible comme dans le cas précédent de situer le trait de découpe hors de telle sorte que la limite de la zone revêtue se situe à proximité immédiate du bord de la feuille découpée de sorte que le rodage ramène cette limite précisément au bord de la feuille.

La découpe est habituellement faite à partir de la face supérieure de la feuille qui repose sur un ensemble convoyeur. La difficulté de procéder à la découpe sur la face de la feuille opposée à celle portant la couche d'émail vient de ce que l'application de la couche s'effectue également sur la face supérieure de la feuille. Il faut donc prévoir une opération de retournement de la feuille après la pré-cuisson de la composition d'émail.

La pratique de la pré-cuisson de l'émail est avantageuse dans la mesure où en fixant la composition elle permet de manipuler les feuilles sans risque d'altération mécanique de la couche, et sans risque de transfert de la composition vers les objets avec lesquels elle peut entrer en contact. Cette pré-cuisson est particulièrement utile dans le cas des vitrages feuilletés comportant un motif émaillé sur une des faces situées à l'intérieur du feuilleté, autrement dit sur l'une des faces désignées traditionnellement par "2" ou "3", les faces étant numérotées à partir de l'extérieur. Dans ce cas il n'est pratiquement pas possible d'effectuer la cuisson de l'émail au cours du traitement thermique du vitrage sans avoir procédé au préalable à la pré-cuisson. Faute de cette pré-cuisson le motif émaillé déposé en face 2 ou 3, est en contact avec la deuxième feuille de verre du feuilleté alors qu'il n'est pas "stabilisé". Dans cette situation on constate des transferts du motif d'une feuille à l'autre.

Si la nécessité de procéder à la pré-cuisson s'impose dans le cas des feuilletés portant l'émail en face 2 ou 3, d'autres problèmes peuvent aussi conduire à choisir la pré-cuisson de l'émail lorsque le motif appliqué entre en contact avec des outils avant ou au cours du traitement thermique. En effet si le traitement thermique lui-même est de nature à opérer la totalité de la cuisson de l'émail, avant d'avoir subi la pré-cuisson le motif n'est pas stabilisé et tout contact avec un objet est susceptible d'altérer la couche. Ceci vaut aussi bien pour les vitrages feuilletés que pour les vitrages ne comportant qu'une feuille de verre.

L'invention est décrite de façon détaillée dans la suite en faisant référence aux dessins dans lesquels :
- les figures la à 1g forment un schéma synoptique de la préparation traditionnelle d'un vitrage feuilleté comportant un motif émaillé;
- les figures 2a à 2g forment un schéma synoptique analogue à celui de la figure 1 dans les conditions de l'invention;
- les figures 3a à 3c illustrent un des modes de mise à dimension des vitrages selon l'invention;
- les figures 4 illustrent un deuxième mode de mise à dimension des vitrages selon l'invention.

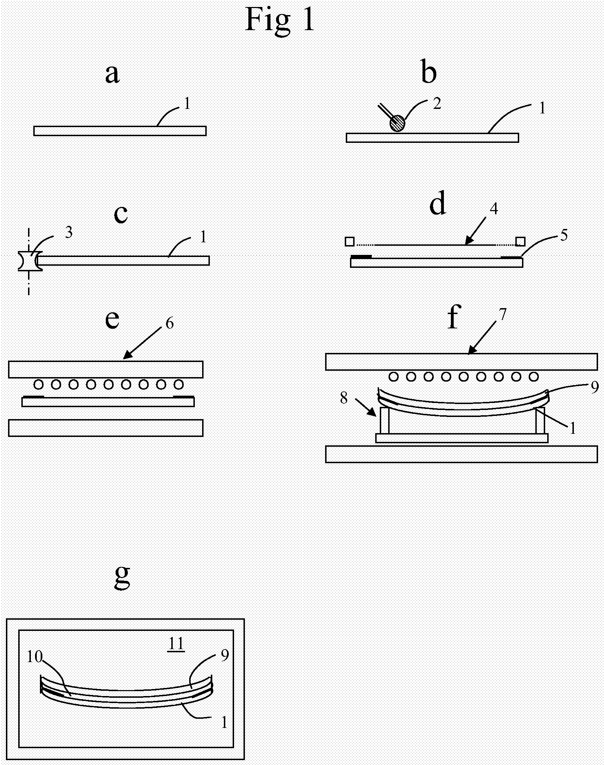

La figure 1 illustre de façon schématique les différentes étapes de préparation d'un vitrage feuilleté comportant un motif émaillé dans un mode traditionnel.

En la la feuille de verre 1 sous forme d'un primitif dont les dimensions sont supérieures à celle du vitrage final, et la forme habituellement rectangulaire ou trapézoïdale, est découpée en 1b au moyen de molettes 2 suivant la forme du vitrage final. En 1c les bords de la feuille sont ensuite rodés avec une meule 3 pour en éliminer les arêtes vives. Les dimensions de la feuille ne sont plus modifiées.

En 1d la feuille mise à dimension est revêtue d'une composition d'émail 5 selon le motif choisi, par exemple à la périphérie, pour constituer la bande opaque de masquage du joint de colle du vitrage sur la carrosserie d'un véhicule. Dans le mode présenté l'application est faite par une technique de sérigraphie comportant l'usage de tamis 4. L'application de cette bande périphérique en bordure du vitrage ne peut garantir un parfait alignement du bord de la feuille et de celui de la bande d'émail de masquage 5. La production en grandes séries fait apparaître accidentellement soit une partie non revêtue entre le bord du vitrage et la limite de la bande de masquage, soit un motif qui déborde la limite du vitrage et peut s'étendre sur la tranche de celui-ci.

La composition d'émail déposée est ensuite cuite. L'opération est avantageusement conduite directement au cours du traitement thermique de la feuille lorsque ceci est possible. Les températures de trempe ou de bombage sont en effet supérieures à celles nécessaires pour conduire à la cuisson de l'émail. Pour cela cependant il faut que le motif ne soit pas exposé au contact d'un outil ou d'une autre feuille. Dans l'hypothèse inverse il est nécessaire de procéder à une pré-cuisson qui stabilise le motif émaillé.

Ainsi dans le cas des vitrages feuilletés la production peut se poursuivre de deux façons distinctes. Si la bande émaillée dans le vitrage feuilleté final se situe en face "4", autrement dit sur la face tournée vers l'intérieur du véhicule, face habituellement concave, le bombage ultérieur est conduit avec la face portant le motif émaillé sur le dessus. Il n'est au contact d'aucun élément susceptible de le détériorer avant que la composition soit fixée. Dans ce cas, il est possible de passer directement l'ensemble des deux feuilles appariées dans le four de bombage après un simple séchage de la composition d'émail. La sintérisation de l'émail est conduite en même temps que le bombage, la température atteinte étant plus que suffisante pour cette sintérisation. L'opération permet de minimiser la consommation énergétique.

Dans le cas représenté à la figure le et 1f, le motif émaillé est situé en face "2" du vitrage feuilleté. Cette disposition est préférée lorsque le vitrage comporte un ensemble de couches fonctionnelles fragiles et qui pour cette raison sont situées sur une face interne au feuilleté notamment en face "3".

Lorsque la bande de masquage est située dans le feuilleté il faut que la composition soit suffisamment fixée préalablement à l'appairage des feuilles. Pour cela la pratique est de soumettre le motif émaillé à une pré-cuisson, en le dans un four 6 permettant la stabilisation du motif en vue des manipulations ultérieures. Les températures nécessaires sont moindres que celles du traitement bombage ou trempe des feuilles.

La pré-cuisson des motifs émaillés est fonction de la composition appliquée. Ces compositions présentent toutes, des éléments de même nature. Il s'agit essentiellement de pigments minéraux associés à une fritte de verre. Ces éléments solides sont mélangés à des solvants et diluants qui donnent la fluidité requise pour l'application. Des composés polymères sont aussi généralement présents qui assurent la fixation temporaire des éléments solides après élimination des solvants et avant la fusion (sintérisation) de la fritte.

La pré-cuisson qui correspond non seulement à l'élimination des solvants volatiles mais aussi à la destruction des composés organiques s'accomplit à des températures qui dépassent ordinairement les 200°C. L'élimination est d'autant plus rapide que la température est plus élevée. On peut estimer qu'au-delà de 400°C, la totalité des constituants organiques est détruite et qu'il ne reste que les composants minéraux, fritte et pigments. De préférence température de la pré-cuisson est choisie de manière à limiter la consommation énergétique à ce stade, la feuille précuite n'étant pas normalement immédiatement soumise au traitement thermique de la feuille. A ce stade également on évite de dépasser la température de modification des contraintes (Tg) de la feuille de verre.

La sintérisation de la composition d'émail, en modifiant la nature de la composition conduit à une structure dont les caractéristiques la rendent beaucoup plus résistante aux températures élevées. La composition devient moins "collante" tout en adhérant fortement à la feuille sur laquelle elle est appliquée.

La formation du vitrage feuilleté est ensuite poursuivie de façon traditionnelle par exemple dans un four de bombage 7. La feuille 1 découpée et revêtue de la bande émaillée 5 précuite est appariée avec une feuille de même dimensions 9, et soumise à une élévation de température conduisant à son ramollissement. Le formage des feuilles est conduit par exemple sur des cadres 8 qui les soutiennent à leur périphérie.

En 1g les feuilles préalablement formées sont associées à une feuille 10 d'un matériau thermoplastique intercalaire de type connu, par exemple une feuille de PVB au cours par exemple du passage dans une étuve 11 et sous pression.

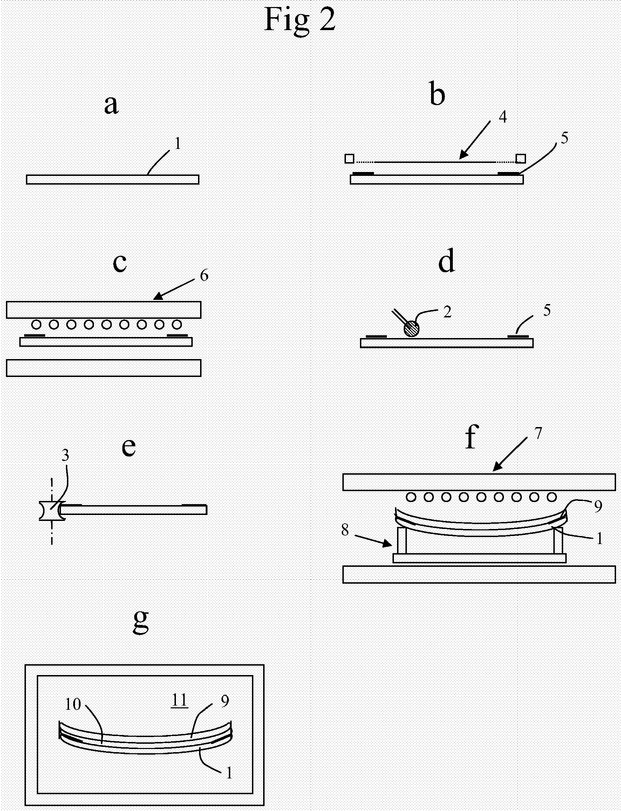

Le schéma synoptique de la figure 2 reprend la formation d'un vitrage feuilleté dans les modalités cette fois de l'invention. La succession des opérations y est sensiblement modifiée.

La feuille de verre 1 constituant le primitif est d'abord revêtue de la composition émaillée en 2b. Cette composition est soumise à une pré-cuisson en 2c et ensuite seulement découpée en 2d aux dimensions finales. La découpe est faite de préférence à proximité immédiate mais en dehors des zones émaillées précuites.

Les feuilles découpées sont ensuite rodées en 2e. Le rodage permet de faire coïncider exactement le bord de la feuille de verre et celui du motif émaillé.

Les opérations ultérieures de bombage et d'assemblage des feuilles, schématisées en 2f et 2g, sont analogues à celles décrites précédemment en référence à la figure 1.

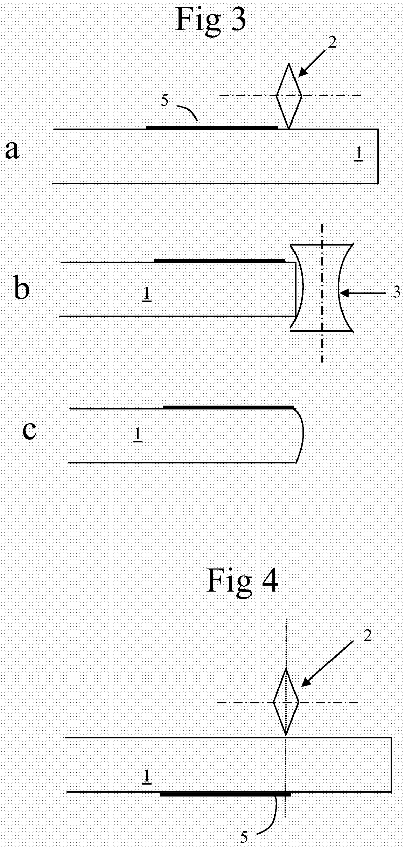

La figure 3 montre à une échelle plus grande une position de la ligne de découpe selon l'invention 3a. Dans ce mode la molette passe à proximité du bord du motif émaillé sans empiéter sur celui-ci. En 3b le rodage du bord de la feuille découpée ramène le motif émaillé en coïncidence avec le bord de la feuille comme représenté en 3c.

Si la découpe peut être conduite sur la face ne comportant pas le motif émaillé, comme représenté en figure 4, le trait de découpe peut être localisé de telle sorte que la découpe se situe dans la zone émaillée. Le bord de la feuille coïncide alors avec celui du motif. Le rodage ultérieur ne change bien entendu pas cette disposition relative. Si cette façon de faire paraît plus facile dans la mesure ou l'ajustement de la position du motif émaillé est moins contraignant, le fait en général de devoir procéder à un retournement de la feuille pour effectuer la découpe, rend cette opération moins avantageuse.

## Revendications

1. Méthode de traitement thermique de bombage et/ou de trempe d'un vitrage revêtu pour partie d'au moins une couche d'une composition émaillée, dans laquelle la composition émaillée est appliquée à l'état fluide sur la feuille de verre selon le motif désiré lequel, sur le vitrage fini, s'étend au moins en partie jusqu'au bord du vitrage, la composition émaillée étant précuite avant de procéder au traitement thermique pour en éliminer au moins les constituants organiques qu'elle renferme, méthode dans laquelle la découpe de la feuille de verre est effectuée après la pré-cuisson de la composition d'émail **caractérisée en ce que** l'outil de découpe utilisé n'entre pas en contact avec la composition précuite et **en ce que** après la découpe, le bord de la feuille de verre est soumis à un rodage avant de procéder au traitement thermique.

2. Méthode selon la revendication 1 dans laquelle la ligne de découpe est proche de la partie revêtue de la composition d'émail mais hors de celle-ci.

3. Méthode selon la revendication 2 dans laquelle la ligne de découpe est suffisamment proche de la limite de la partie revêtue de la composition d'émail, de telle sorte que le rodage du bord du vitrage conduise cette partie émaillée au bord de la feuille rodée.

4. Méthode selon la revendication 1, dans laquelle la ligne de découpe est située sur la face de la feuille de verre ne portant pas la composition d'émail précuite.

5. Méthode selon la revendication 4 dans laquelle la ligne de découpe se situe au moins en partie en regard d'une zone de la feuille de verre comportant la composition d'émail précuite.

## Patentansprüche

1. Wärmebehandlungsverfahren zum Biegen und/oder Vorspannen einer Verglasung, die zum Teil mit mindestens einer Schicht aus einer Emailzusammensetzung überzogen ist, bei dem die Emailzusammensetzung im fluiden Zustand auf die Glasfolie gemäß dem gewünschten Motiv aufgebracht wird, das sich auf der fertigen Verglasung zumindest teilweise bis zum Rand der Verglasung erstreckt, wobei die Emailzusammensetzung vorgebrannt wird, bevor die Wärmebehandlung durchgeführt wird, um zumindest die organischen Bestandteile, die sie einschließt, aus ihr zu entfernen, wobei bei dem Verfahren das Ausschneiden der Glasfolie nach dem Vorbrennen der Emailzusammensetzung erfolgt, **dadurch gekennzeichnet, dass** das verwendete Schneidwerkzeug nicht mit der vorgebrannten Zusammensetzung in Kontakt kommt, und dass nach dem Ausschneiden der Rand der Glasfolie einem Schleifen unterzogen wird, bevor die Wärmebehandlung durchgeführt wird.

2. Verfahren nach Anspruch 1, bei dem die Schneidlinie nahe dem überzogenen Teil der Emailzusammensetzung, aber außerhalb desselben, ist.

3. Verfahren nach Anspruch 2, bei dem die Schneidlinie nahe genug der Grenze des überzogenen Teils der Emailzusammensetzung ist, dass das Schleifen des Randes der Verglasung diesen emaillierten Teil zum Rand der geschliffenen Folie führt.

4. Verfahren nach Anspruch 1, bei dem die Schneidlinie auf der Seite der Glasfolie angeordnet ist, die nicht die vorgebrannte Emailzusammensetzung trägt.

5. Verfahren nach Anspruch 4, bei dem die Schneidlinie zumindest teilweise gegenüber einer Zone der Glasfolie angeordnet ist, die die vorgebrannte Emailzusammensetzung umfasst.

## Claims

1. Method for the bending and/or tempering heat treatment of a glazing coated in part with at least one layer of an enamel composition, in which the enamel composition is applied in the fluid state to the glass sheet according to the desired pattern which, on the finished glazing, extends at least partly to the edge of the glazing, the enamel composition being pre-fired before carrying out the heat treatment in order to remove therefrom at least the organic constituents that it contains, in which method the glass sheet is cut after the pre-firing of the enamel composition **characterized in that** the cutting tool used does not come into contact with the pre-fired composition and **in that**, after the cutting, the edge of the glass sheet is subjected to a grinding before carrying out the heat treatment.

2. Method according to Claim 1, in which the cutting line is close to the part coated with the enamel composition but outside thereof.

3. Method according to Claim 2, in which the cutting line is close enough to the boundary of the part coated with the enamel composition, so that the grinding of the edge of the glazing brings this enamelled part to the edge of the ground sheet.

4. Method according to Claim 1, in which the cutting line is located on the face of the glass sheet that does not bear the pre-fired enamel composition.

5. Method according to Claim 4, in which the cutting line lies at least partly opposite a zone of the glass sheet comprising the pre-fired enamel composition.
